# FASCICULE DE BREVET EUROPEEN

(11) **EP 4 493 854 B1**
(45) Date de publication et mention de la délivrance du brevet: **11.02.2026**
(21) Numéro de dépôt: 23709147.5
(22) Date de dépôt: 01.03.2023
(51) Int. Cl.: F17C 9/00

(54) **DISPOSITIF DE DEGAZAGE D'HYDROGENE LIQUIDE**
VORRICHTUNG ZUR ENTGASUNG VON FLÜSSIGEM WASSERSTOFF
LIQUID HYDROGEN DEGASSING DEVICE

(30) Priorité: 16.03.2022 FR 2202287
(43) Date de publication de la demande: 22.01.2025
(73) Titulaire: ALFA LAVAL SWITZERLAND AG, 4123 Allschwil (CH)
(72) Inventeur: BOEGLIN, Stéphane, 4123 Allschwil (CH); GEBEL, Félicien, 4123 Allschwil (CH); DUVIVIER, Pierre-Yves, 4123 Allschwil (CH)
(74) Mandataire: IP Trust
(86) Numéro de dépôt international: PCT/EP2023/055110
(87) Numéro de publication internationale: WO 2023/174682

(56) Documents cités:
- WO-A2-2015/097162
- DE-A1- 102020 007 617
- US-A- 5 513 961
- US-A1- 2013 327 421

## Description

### Désignation du domaine technique concerné

La présente invention est relative aux installations cryogéniques de production, de stockage ou d'utilisation d'hydrogène liquide. Elle concerne plus particulièrement les circuits fluidiques disposés en amont de pompes assurant la circulation d'hydrogène liquide.

### Problèmes techniques auxquels répond l'invention

L'hydrogène liquide est stocké et il circule dans les circuits fluidiques à une température voisine de sa température d'ébullition à la pression de l'installation. De par sa nature, l'apport d'énergie nécessaire pour son changement de phase liquide/gaz est faible. Ainsi, un faible apport de calories suffit pour provoquer la formation de bulles d'hydrogène gazeux.

Bien que les réservoirs et les tuyauteries sont isolés par un double circuit maintenu sous vide, l'isolation n'est pas totale et un léger échauffement de l'hydrogène résulte d'apport de calories de l'environnement extérieur. De plus, un léger échauffement complémentaire résulte de l'écoulement de l'hydrogène dans le circuit. Ainsi, des bulles d'hydrogène gazeux se forment dans le circuit.

Au niveau des pompes assurant la circulation de l'hydrogène liquide, la présence de bulles gazeuses entraine un échauffement complémentaire de l'hydrogène dans la pompe. Il est dès lors nécessaire de dégazer le liquide avant son entrée dans la pompe pour limiter l'apport de calories dans la pompe par ces bulles de gaz et réduire l'échauffement supplémentaire de l'hydrogène liquide dans la pompe qui résulterait de la présence de bulles à l'aspiration.

En raison de sa très faible densité, il n'existe pas de débulleur mécanique pour l'hydrogène. Il existe des solutions de séparations liquide/gaz cycloniques mais elles sont complexes et couteuses.

Généralement, une simple ligne de retour vers le réservoir de stockage de l'hydrogène est disposée en amont de la pompe cryogénique. Cette ligne de retour a traditionnellement une section inférieure ou égale à la section de la tuyauterie d'alimentation de la pompe. Son efficacité pour le dégazage de l'hydrogène liquide à l'aspiration de la pompe est cependant limitée et une quantité de bulles de gaz est entrainée à l'aspiration de la pompe.

L'invention apporte une solution nouvelle à ce problème. Un exemple de dispositif de dégazage est montré dans le document US 2013/327421.

### Résumé de l'invention

Selon l'invention, il est proposé un dispositif de dégazage d'hydrogène liquide en circulation dans un circuit, tel que définit par la revendication 1.

Le dispositif selon l'invention permet d'assurer un dégazage efficace en amont de la pompe. La réduction importante de la vitesse d'écoulement de l'hydrogène liquide permet aux bulles de gaz de monter dans la chambre verticale en direction du circuit de retour vers le réservoir de stockage, sans être entrainées par un courant trop important en direction du conduit d'alimentation de la pompe. On évite ainsi que des bulles de gaz ne soient aspirées par la pompe.

Le déflecteur a pour effet de favoriser la remonté des bulles de gaz dans la chambre verticale et augmente ainsi l'efficacité du dégazage.

Avantageusement, le déflecteur se trouve dans le prolongement de l'axe du conduit d'arrivée du liquide dans la chambre verticale afin de renforcer son effet. Il est avantageusement centré dans la chambre verticale de sorte que la même proportion d'hydrogène liquide s'écoule de part et d'autre de celui-ci.

Avantageusement, la surface du déflecteur est supérieure à la section de l'embouchure du conduit d'arrivée du liquide dans la chambre verticale.

### Brève description des figures

D'autres caractéristiques et avantages de l'invention apparaîtront au cours de la lecture de la description détaillée qui va suivre pour la compréhension de laquelle on se reportera aux dessins annexés dans lesquels :
[Fig.1] est une vue schématique et partielle en élévation d'une installation de stockage et de fourniture d'hydrogène liquide selon un exemple de réalisation de l'invention ;
[Fig.2] est une vue schématique et partielle en vue de dessus de la chambre verticale selon la [Fig.1].

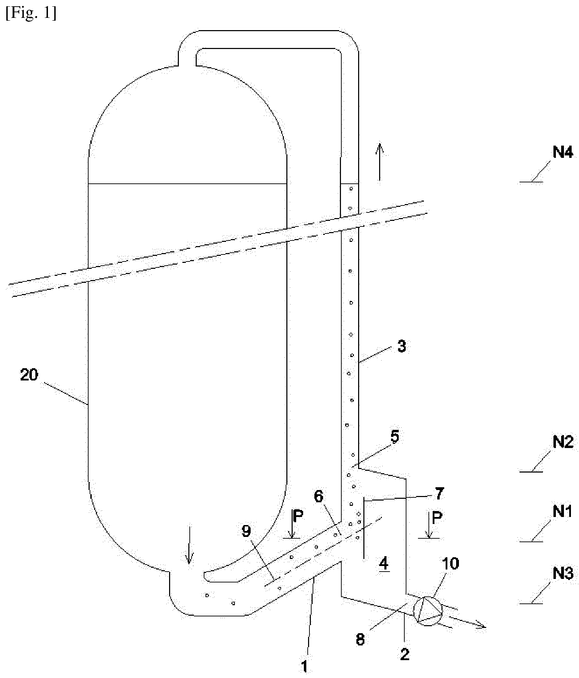

La [Fig.1] illustre partiellement et schématiquement une installation de stockage et de fourniture d'hydrogène liquide. Elle comprend un réservoir 20 de stockage, en particulier un réservoir vertical et de forme cylindrique, contenant de l'hydrogène liquide jusqu'à un niveau N4 et, au-dessus, de l'hydrogène gazeux. Cet hydrogène gazeux résulte d'une évaporation de l'hydrogène liquide due principalement à un apport de calories par les parois du réservoir 20 de stockage et du circuit fluidique.

A l'extrémité inférieure du réservoir 20 de stockage se trouve un conduit 1 d'arrivée de l'hydrogène liquide vers des équipements non représentés situés en aval. Bien que le conduit 1 d'arrivée soit très isolé thermiquement, avec typiquement une double enveloppe calorifugée et maintenu sous vide, un apport de calories par ses parois extérieures provoque la formation de bulles de gaz, en particulier des bulles d'hydrogène gazeux.

Le conduit 1 d'arrivée débouche dans une chambre 4 verticale cylindrique d'un diamètre fortement plus élevé que celui du conduit 1 d'arrivé. La section de la chambre 4 verticale est ainsi supérieure ou égale à deux fois celle du conduit 1 d'arrivée. L'hydrogène liquide circule alors à une vitesse fortement réduite dans la chambre 4 verticale comparée à celle dans le conduit 1 d'arrivée. La vitesse d'écoulement de l'hydrogène liquide dans le conduit 1 d'arrivée est typiquement comprise entre 0.5 m/ sec et 2 m/sec. La section de la chambre 4 verticale est choisie de sorte que l'hydrogène liquide s'écoule dans celle-ci à une vitesse réduite, par exemple comprise entre 30% et 50% de la vitesse dans le conduit 1 d'arrivée. Cette faible vitesse d'écoulement du liquide dans la chambre 4 verticale permet aux bulles de gaz de remonter vers le haut de la chambre 4 verticale, puis vers un conduit 3 de retour vers le réservoir 20 de stockage et enfin le réservoir 20 de stockage.

En régime de fonctionnement, l'essentiel du débit d'hydrogène liquide arrivant par le conduit 1 d'arrivée s'écoule vers un conduit 2 d'alimentation de la pompe 10 et est entrainé par celle-ci. Par exemple, pour un débit de 100 m³ dans le conduit 1 d'arrivée, environ 98 m³ vont vers la pompe 10 et 2 m³ remontent vers le réservoir 20 de stockage.

Le conduit 1 d'arrivée peut être horizontal ou incliné. Avantageusement, le conduit 1 d'arrivée est incliné avec son extrémité aval surélevée de sorte que les bulles de gaz se positionnent sur le haut du conduit 1 d'arrivée et s'écoule plus facilement vers le haut de la chambre 4 verticale.

La chambre 4 verticale est avantageusement cylindrique mais elle peut néanmoins avoir toute autre forme. Elle est isolée thermiquement par une double enveloppe extérieur calorifugée maintenant un espace sous vide pour limiter le transfert de calories à l'hydrogène liquide par l'environnement extérieur.

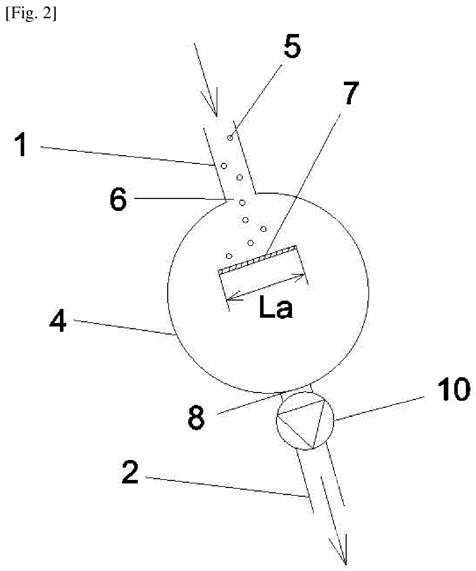

Comme représenté sur les figures 1 et 2, un déflecteur 7 est disposé dans la chambre 4 verticale face à l'embouchure du conduit 1 d'arrivée afin de favoriser la remonté des bulles de gaz dans la chambre 4 verticale. Ce déflecteur 7 peut être une tôle maintenue par des moyens de support reliés aux parois internes de la chambre 4 verticale.

En partie basse de la chambre 4 verticale se trouve un conduit 2 d'alimentation d'une pompe 10. L'embouchure 8 de ce conduit dans la chambre 4 verticale se trouve à un niveau N3 inférieur au niveau N1 où se trouve l'embouchure du conduit 1 d'arrivée dans la chambre 4 verticale. La différence de hauteur entre les niveaux N1 et N3 est choisie de sorte d'éviter que des bulles de gaz en provenance du conduit 1 d'arrivée ne soient entrainées dans le conduit 2 d'alimentation de la pompe 10. Elle doit cependant être limitée pour réduire la longueur du trajet entre les deux orifices 6 et 8 et réduire également la hauteur de la chambre 4 verticale de sorte de limiter l'échauffement de l'hydrogène liquide.

L'embouchure 5 du conduit 3 de retour vers le réservoir 20 de stockage se trouve à un niveau N2 supérieur au niveau N1 où se trouve l'embouchure du conduit 1 d'arrivée dans la chambre 4 verticale. L'embouchure 5 est disposée sur la partie supérieure la chambre 4 verticale. Elle est avantageusement horizontale et disposée sensiblement à la verticale de l'embouchure 6 du conduit 2 d'arrivée de sorte de limiter le trajet des bulles de gaz dans la chambre 4 verticale et les changements de directions lors de ce trajet.

La hauteur de la chambre 4 verticale est limitée à celle nécessaire pour le dégazage de sorte de limiter l'apport en calories par ses parois extérieures. La distance entre l'embouchure 6 du conduit 2 d'arrivée et celle 5 du conduit 3 de retour est par exemple de 5 cm. Les dimensions du système sont optimisées pour limiter les entrées de chaleur.

La longueur du conduit 2 d'alimentation de la pompe 10 est réduite autant que possible pour limiter l'échauffement de l'hydrogène dans ce conduit 2 d'alimentation en amont de la pompe 10. Le conduit 2 d'alimentation de la pompe 10 peut être horizontal ou incliné. Avantageusement, le conduit 2 d'alimentation est incliné de sorte que l'entrée du conduit 2 d'alimentation soit disposée à une hauteur plus importante que sa sortie, côté pompe 10. Ainsi, des bulles de gaz qui serraient présentes dans le conduit 2 d'alimentation peuvent remonter vers la chambre 4 verticale.

La [Fig.2] est vue schématique et partielle en vue de dessus de la chambre 4 verticale selon le plan P de la [Fig.1]. Comme représenté sur cette figure, la largeur La du déflecteur 7, sa hauteur et la distance à laquelle il est positionné par rapport à l'embouchure 6 du conduit 1 d'arrivée du liquide sont choisis de sorte que la vitesse d'écoulement de l'hydrogène liquide en contournement du déflecteur 7 reste faible, par exemple de 0.2 m/sec.

L'axe du conduit 1 d'arrivée du liquide dans la chambre 4 verticale et celui du conduit 2 d'alimentation de la pompe 10 sont avantageusement disposés sur un même plan vertical de sorte que l'écoulement de l'hydrogène entre ces deux conduits dans la chambre 4 verticale soit le plus linéaire possible et génère le moins de perde de charge pour limiter autant que possible un échauffement de l'hydrogène lors de son écoulement.

## Revendications

1. Dispositif de dégazage d'hydrogène liquide en circulation dans un circuit, l'hydrogène liquide étant susceptible d'être stocké dans un réservoir (20) de stockage, le dispositif de dégazage comprenant un circuit comprenant une chambre (4) verticale de dégazage avec laquelle communiquent fluidiquement trois conduits (1,2,3),
- un conduit (1) d'arrivée configuré pour faire circuler du liquide du réservoir (20) de stockage vers la chambre (4) verticale,
- un conduit (2) d'alimentation configuré pour alimenter une pompe (10) vers lequel s'écoule une partie du liquide arrivée dans la chambre (4) verticale par le conduit (1) d'arrivée, et
- un conduit (3) de retour recevant une autre partie du liquide arrivée dans la chambre (4) verticale par le conduit (1) d'arrivée,
le dispositif étant **caractérisé en ce que** la section de la chambre (4) verticale au niveau (N1) de l'embouchure (6) du conduit (1) d'arrivée du liquide dans la chambre (4) verticale est plus grande que la section du conduit (1) d'arrivé du liquide à son embouchure, **en ce que** le ratio entre ces deux sections est supérieur ou égal à deux, et **en ce qu'**un déflecteur (7) est disposé dans la chambre (4) verticale face à l'embouchure (6) du conduit (1) d'arrivée.

2. Dispositif selon la revendication 1, **caractérisé en ce que** le déflecteur (7) se trouve dans le prolongement de l'axe (9) du conduit (1) d'arrivée du liquide dans la chambre verticale.

3. Dispositif selon l'une des revendications précédentes, **caractérisé en ce que** la surface du déflecteur (7) est supérieure à la section de l'embouchure (6) du conduit (1) d'arrivée du liquide dans la chambre verticale.

4. Dispositif selon l'une des revendications précédentes, **caractérisé en ce que** l'embouchure (5) du conduit de retour dans la chambre verticale est disposée à un niveau (N2) de la chambre verticale supérieur au niveau (N1) où se trouve l'embouchure (6) du conduit (1) d'arrivée du liquide dans la chambre (4) verticale et **en ce que** l'embouchure (8) du conduit (2) d'alimentation de la pompe (10) dans la chambre (4) verticale est disposée à un niveau (N3) de la chambre verticale inférieur au niveau (N1) de l'embouchure (6) du conduit (1) d'arrivée du liquide.

5. Procédé de dégazage d'hydrogène liquide en circulation mis en œuvre dans un dispositif selon l'une des revendications 1 à 4, **caractérisé en ce qu'**on procède à un ralentissement de la vitesse de l'hydrogène liquide à l'embouchure (6) du conduit (1) d'arrivée dans la chambre (4) verticale pour favorise l'évacuation des bulles d'hydrogène gazeux vers le conduit (3) de retour.

6. Procédé selon la revendication 5, **caractérisé en ce que** la vitesse de l'hydrogène liquide à l'embouchure (6) du conduit (1) d'arrivée dans la chambre (4) verticale est comprise entre 30% et 50% de la vitesse de l'hydrogène liquide dans le conduit d'arrivée.

## Patentansprüche

1. Entgasungsvorrichtung für flüssigen Wasserstoff, der in einem Kreislauf zirkuliert, wobei der flüssige Wasserstoff dazu geeignet ist, in einem Speichertank (20) gespeichert zu werden, die Entgasungsvorrichtung umfassend einen Kreislauf, umfassend eine vertikale Entgasungskammer (4) mit der drei Leitungen (1,2,3) fluidisch in Verbindung stehen,
- eine Einlassleitung (1), die zum Inumlaufbringen von Flüssigkeit des Speichertanks (20) zu der vertikalen Kammer (4) hin konfiguriert ist,
- eine Beschickungsleitung (2), die zum Beschicken einer Pumpe (10) konfiguriert ist, zu der ein Teil der Flüssigkeit fließt, die in die vertikale Kammer (4) über die Einlassleitung (1) eingelassen wird, und
- eine Rücklaufleitung (3), die einen weiteren Teil der Flüssigkeit aufnimmt, die in die vertikale Kammer (4) über die Einlassleitung (1) eingelassen wird,
wobei die Vorrichtung **dadurch gekennzeichnet ist, dass** der Querschnitt der vertikalen Kammer (4) auf Höhe (N1) der Mündung (6) der Einlassleitung (1) der Flüssigkeit in die vertikale Kammer (4) größer als der Querschnitt der Einlassleitung (1) an ihrer Mündung ist, wobei das Verhältnis zwischen diesen zwei Querschnitten größer als oder gleich zwei ist und ein Ablenker (7) in der vertikalen Kammer (4) gegenüber der Mündung (6) der Einlassleitung (1) angeordnet ist.

2. Vorrichtung nach Anspruch 1, **dadurch gekennzeichnet, dass** sich der Ablenker (7) in der Verlängerung der Achse (9) der Einlassleitung (1) der Flüssigkeit in die vertikale Kammer befindet.

3. Vorrichtung nach einem der vorstehenden Ansprüche,
**dadurch gekennzeichnet, dass** die Oberfläche des Ablenkers (7) größer als der Querschnitt der Mündung (6) der Einlassleitung (1) der Flüssigkeit in die vertikale Kammer ist.

4. Vorrichtung nach einem der vorstehenden Ansprüche,
**dadurch gekennzeichnet, dass** die Mündung (5) der Rücklaufleitung in der vertikalen Kammer auf einer Höhe (N2) der vertikalen Kammer angeordnet ist, die über der Höhe (N1) liegt, bei der sich die Mündung (6) der Einlassleitung (1) der Flüssigkeit in die vertikale Kammer (4) befindet, und dadurch, dass die Mündung (8) der Beschickungsleitung (2) der Pumpe (10) in die vertikale Kammer (4) auf einer Höhe (N3) der vertikalen Kammer angeordnet ist, die unter der Höhe (N1) der Mündung (6) der Einlassleitung (1) der Flüssigkeit liegt.

5. Verfahren zum Entgasen von zirkulierendem flüssigem Wasserstoff, ausgeführt in einer Vorrichtung nach einem der Ansprüche 1 bis 4,
**dadurch gekennzeichnet, dass** eine Verlangsamung der Geschwindigkeit des flüssigen Wasserstoffs an der Mündung (6) der Einlassleitung (1) in die vertikale Kammer (4) durchgeführt wird, zum Unterstützen der Ableitung von gasförmigen Wasserstoffblasen zu der Rücklaufleitung (3) hin.

6. Verfahren nach Anspruch 5, **dadurch gekennzeichnet, dass** die Geschwindigkeit des flüssigen Wasserstoffs an der Mündung (6) der Einlassleitung (1) in die vertikale Kammer (4) zwischen 30 % und 50 % der Geschwindigkeit des flüssigen Wasserstoffs in der Einlassleitung liegt.

## Claims

1. Device for degassing liquid hydrogen circulating in a circuit, the liquid hydrogen being able to be stored in a storage tank (20), the degassing device comprising a circuit having a vertical degassing chamber (4) with which three pipes (1,2,3) communicate fluidically,
- an inlet pipe (1) configured for circulating the liquid from the storage tank (20) to the vertical chamber (4),
- a feed pipe (2) configured for supplying a pump (10) to which some of the liquid which enters the vertical chamber (4) through the inlet pipe (1) flows, and
- a return pipe (3) receiving another part of the liquid which enters the vertical chamber (4) through the inlet pipe (1),
the device being **characterized in that** the cross section of the vertical chamber (4) at the level (N1) of the mouth (6) of the inlet pipe (1) for the entry of the liquid into the vertical chamber (4) is greater than the cross section of the inlet pipe (1) for the entry of the liquid at its mouth, **in that** the ratio between these two cross sections is greater than or equal to two, and **in that** a deflector (7) is arranged in the vertical chamber (4) opposite the mouth (6) of the inlet pipe (1).

2. Device according to claim 1, **characterized in that** the deflector (7) is located in line with the axis (9) of the inlet pipe (1) for the entry of the liquid into the vertical chamber.

3. Device according to any of the preceding claims, **characterized in that** the surface area of the deflector (7) is greater than the cross section of the mouth (6) of the inlet pipe (1) for the entry of the liquid into the vertical chamber.

4. Device according to any of the preceding claims, **characterized in that** the mouth (5) of the return pipe into the vertical chamber is arranged at a level (N2) of the vertical chamber higher than the level (N1) at which the mouth (6) of the inlet pipe (1) for the entry of the liquid into the vertical chamber (4) is located and **in that** the mouth (8) of the feed pipe (2) for the pump (10) in the vertical chamber (4) is arranged at a level (N3) of the vertical chamber lower than the level (N 1) of the mouth (6) of the inlet pipe (1) for the entry of the liquid.

5. Method for degassing circulating liquid hydrogen implemented in a device according to any of claims 1 to 4, **characterized in that** the speed of the liquid hydrogen is slowed down at the mouth (6) of the inlet pipe (1) into the vertical chamber (4) to promote the evacuation of hydrogen gas bubbles toward the return pipe (3).

6. Method according to claim 5, **characterized in that** the speed of the liquid hydrogen at the mouth (6) of the inlet pipe (1) into the vertical chamber (4) is between 30% and 50% of the speed of the liquid hydrogen in the inlet pipe.
